# EUROPEAN PATENT APPLICATION

(11) **EP 4 836 324 A1**
(43) Date of publication of application: **04.11.2026**
(21) Application number: 24912668.1
(22) Date of filing: 20.12.2024
(51) Int. Cl.: H04B 10/80

(54) **SIGNAL DETECTION DEVICE AND WIRELESS RECEPTION DEVICE**

(30) Priority: 27.12.2023 JP 2023220970
(71) Applicant: NATIONAL UNIVERSITY CORPORATION TOKAI NATIONAL HIGHER EDUCATION AND RESEARCH SYSTEM, Nagoya-shi, Aichi 464-8601 (JP)
(72) Inventor: HISATAKE Shintaro, Gifu-shi Gifu 501-1193 (JP)
(74) Representative: Seemann & Partner Patentanwälte mbB
(86) International application number: PCT/JP2024/045189
(87) International publication number: WO 2025/142779

(57) **Abstract**

The signal detection device 1 for detecting an electrical signal comprises an electro-optical conversion element 13 that modulates a first optical signal having a first frequency and a second optical signal having a second frequency with the electrical signal, an optical filter that extracts light in a band containing the second optical signal and a sideband signal of the first optical signal and that extracts light in a band containing the first optical signal and a sideband signal of the second optical signal, a first photodiode 16 that generates a first intermediate frequency signal from the second optical signal and a sideband signal of the first optical signal and a second photodiode 17 that generates a second intermediate frequency signal from the first optical signal and a sideband signal of the second optical signal. The signal detection device 1 performs detection based on the difference between the output from the first photodiode and the output from the second photodiode.

## Description

This disclosure relates to a signal detection device and a wireless receiving device.

### Background of the Invention.

### BACKGROUND ART

To detect signals such as RF waves and terahertz waves, a technique has been proposed that utilizes electro-optic effects, e.g., the Pockels effect, to superimpose information from the signal to be detected onto an optical signal as a modulated sideband light, see, for example, Non-Patent Literatures 1 and 2.

### RELATED-ART LITERATURES

### NON-PATENT LITERATURES

Non-Patent Literature 1: S. Hisatake and T. Nagatsuma, "Nonpolarimetric Technique for Homodyne-Type Electrooptic Field Detection," Applied Physics Express 5 (2012).
Non-Patent Literature 2: S. Hisatake, H. H. N. Pham, and T. Nagatsuma, "Visualization of the spatial-temporal evolution of continuous electromagnetic waves in the terahertz range based on photonics technology," Optica, Vol. 1, Issue 6, pp. 365-371 (2014).

### SUMMARY OF INVENTION

### TECHNICAL PROBLEM

The technologies described in Non-Patent Literatures 1 and 2 are based on the principle of modulating two optical signals, i.e., carrier signals, with different frequencies within an electro-optical (EO) device using a detected signal, e.g., an RF wireless signal. By extracting the sideband light generated by this modulation and the strong light in its vicinity using an optical filter, and mixing them using a photodiode, an IF signal (Intermediate Frequency signal) is generated. This IF signal contains the amplitude and phase information of the detected signal. Therefore, by performing lock-in detection on this signal, the amplitude and phase of the detected signal can be detected.

Signal detection utilizing such electro-optical effects allows the signal to be instantly superimposed onto an optical carrier signal and measured as an optical signal, enabling the reuse of existing compact, simple, and inexpensive optical communication platforms. Consequently, this approach offers the advantages of excellent compatibility with optical communication and high versatility.

However, the technologies described in Non-Patent Literatures 1 and 2 still leave room for improvement in terms of sensitivity.

The present disclosure has been made in light of this situation, and its objective is to achieve high-sensitivity signal detection.

### SOLUTION TO PROBLEM

To solve the above problem, a signal detection device for detecting an electrical signal according to one aspect of the present disclosure comprises an electro-optical conversion element that modulates a first optical signal having a first frequency and a second optical signal having a second frequency with the electrical signal, an optical filter that extracts light in a band containing the second optical signal and a sideband signal of the first optical signal and that extracts light in a band containing the first optical signal and a sideband signal of the second optical signal, a first photodiode that generates a first intermediate frequency signal from the second optical signal and a sideband signal of the first optical signal and a second photodiode that generates a second intermediate frequency signal from the first optical signal and a sideband signal of the second optical signal. The signal detection device performs detection based on the difference between the output from the first photodiode and the output from the second photodiode.

In one embodiment, the optical filter may include a first bandpass filter that transmits light in a band containing the second optical signal and sideband signals of the first optical signal, and a second bandpass filter that transmits light in a band containing the first optical signal and sideband signals of the second optical signal. Alternatively, the optical filter may include a FBG filter that reflects light in a band containing the first optical signal and sideband signals of the second optical signal and that transmits at least light in a band containing the second optical signal and sideband signals of the first optical signal and a circulator that receives the first optical signal and the second optical signal modulated by the electrical signal and outputs the first optical signal and the second optical signal to the FBG filter and that outputs the first optical signal and the sideband signal of the second optical signal reflected by the FBG filter to the second photodiode.

In one embodiment, the first photodiode and the second photodiode may be arranged in a dual-type configuration or in a balanced-type configuration.

In one embodiment, the electro-optical conversion element may comprise lithium niobate (LiNbO₃), lithium tantalate (LiTaO₃), zinc telluride (ZnTe), gallium phosphide (GaP), gallium arsenide (GaAs), electro-optical crystal materials comprising OH1 or DAST, or an electro-optical polymer.

Another aspect of the present disclosure is a wireless receiving device for receiving wireless signal. This device comprises a receiving antenna, a multi-tone light signal source for generating light signals of multiple frequencies, an electro-optical conversion element that modulates a first optical signal having a first frequency and a second optical signal having a second frequency, both generated by the multi-tone light signal source, with the wireless signal, an optical filter that extracts light in a band containing the second optical signal and a sideband signal of the first optical signal and that extracts light in a band containing the first optical signal and a sideband signal of the second optical signal,
a first photodiode that generates a first intermediate frequency signal from the second optical signal and a sideband signal of the first optical signal, and
a second photodiode that generates a second intermediate frequency signal from the first optical signal and a sideband signal of the second optical signal.
The wireless receiving device performs detection of the wireless signal based on the difference between the output from the first photodiode and the output from the second photodiode.

In one embodiment, optical filter may include a FBG filter that reflects light in a band containing the first optical signal and sideband signals of the second optical signal and that transmits at least light in a band containing the second optical signal and sideband signals of the first optical signal and a circulator that receives the first optical signal and the second optical signal modulated by the wireless signal and outputs the first optical signal and the second optical signal to the FBG filter and that outputs the first optical signal and the sideband signal of the second optical signal reflected by the FBG filter to the second photodiode.

Any combination of the above components, as well as variations of the present disclosure expressed as methods, devices, systems, recording media, computer programs, etc., are also valid embodiments of the present disclosure.

### ADVANTAGEOUS EFFECTS OF INVENTION

According to the present disclosure, high-sensitivity signal detection can be achieved.

### BRIEF DESCRIPTION OF DRAWINGS

Fig. 1 is a schematic diagram of an experimental setup illustrating the principle of signal detection using electro-optical conversion.
Fig. 2 is a schematic diagram showing the processing flow of the experimental setup of Fig. 1.
Fig. 3 is a schematic diagram of a signal detection device according to the first comparative example.
Fig. 4 is a diagram showing the spectra of the first optical signal (thick solid line), the second optical signal (thin solid line), the first sideband signal (thick dashed line), and the second sideband signal (thin dashed line).
Fig. 5 is a schematic diagram of a signal detection device according to the first embodiment.
Fig. 6 is a diagram showing examples of arrangements for the first photodiode and the second photodiode. Fig. 6(a) shows a dual-type arrangement. Fig. 6(b) shows a balanced-type arrangement.
Fig. 7 is a schematic diagram of a signal detection device according to the second embodiment.
Fig. 8 is a schematic diagram of a signal detection device according to the second comparative example.
Fig. 9 is a schematic diagram of a signal detection device according to the third embodiment.
Fig. 10 is a diagram showing the signal detection results based on the output of the signal detection device shown in Fig. 5. Fig. 10(a) shows the phase of the detected target signal. Fig. 10(b) shows the amplitude of the detected target signal.

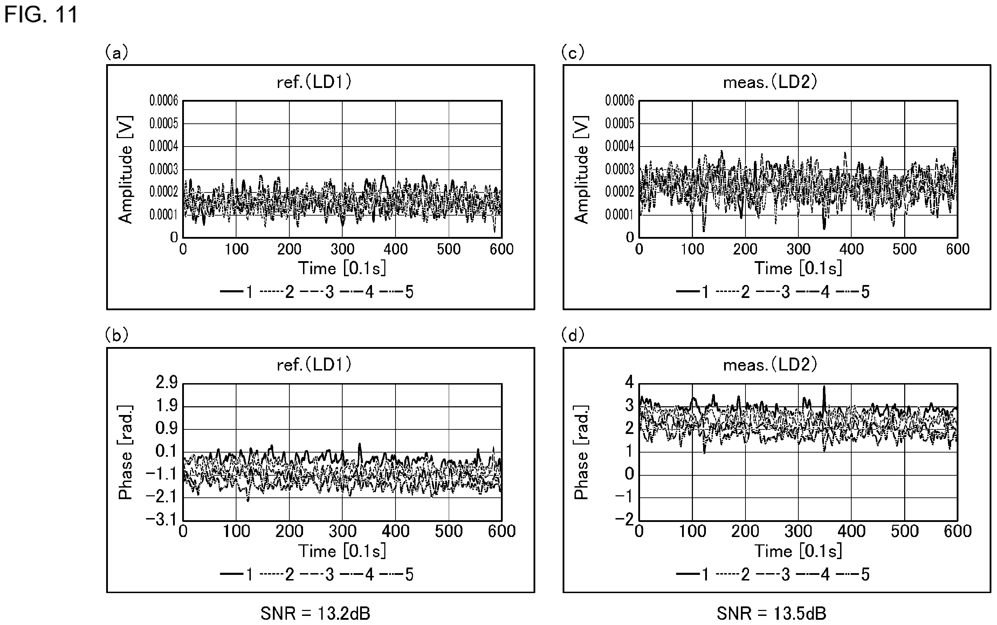

Fig. 11(a) is a diagram showing the signal detection results based on the respective outputs from the first photodiode and the second photodiode of the signal detection device 1. Fig. 11(a) shows the amplitude of the detected signal detected based on the output of the first photodiode. Figure 11(b) shows the phase of the detected signal detected based on the output of the first photodiode. Figure 11(c) shows the amplitude of the detected signal detected based on the output of the second photodiode. Figure 11(d) shows the phase of the detected signal detected based on the output of the second photodiode.
Fig. 12 is a diagram showing the relationship between the signal-to-noise ratio and phase variation in signal detection performed by signal detection device 1.

### DESCRIPTION OF EMBODIMENTS

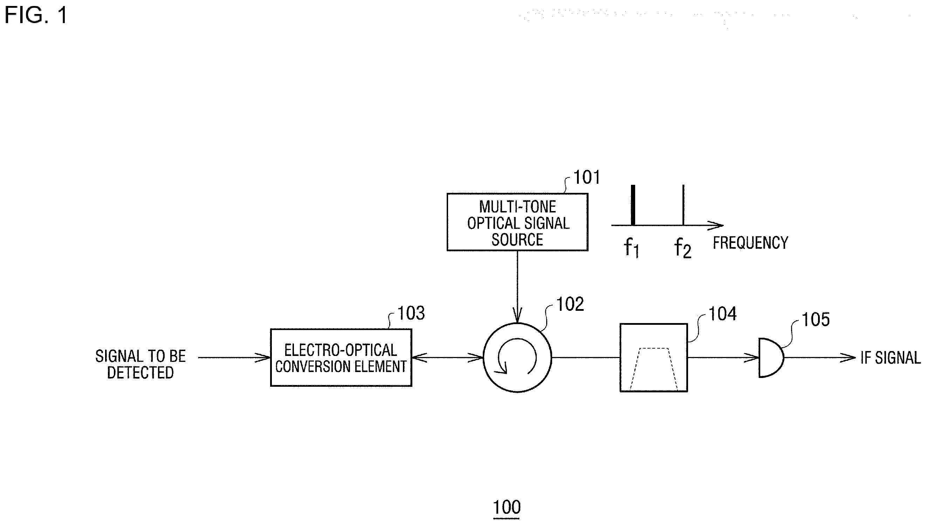

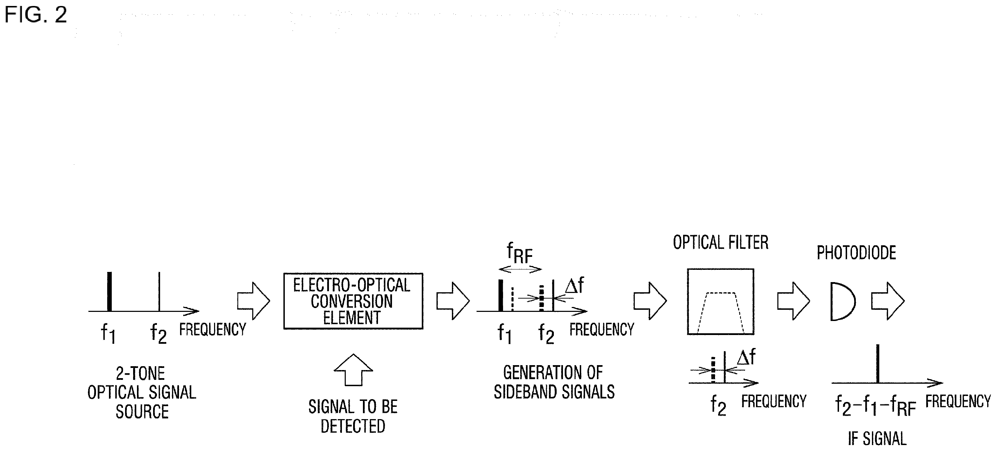

Before describing specific embodiments, the fundamental insights underlying this disclosure will be explained using Figure 1 and Figure 2. Figure 1 is a schematic diagram of experimental setup 100 illustrating the principle of signal detection using electro-optical conversion. Figure 2 is a schematic diagram showing the processing flow of the experimental setup in Figure 1.

The experimental setup 100 comprises a multi-tone optical signal source 101, a circulator 102, an electro-optical conversion element 103, an optical filter 104, and a photodiode 105.

The multi-tone optical signal source 101 generates a first optical signal S1 having a frequency f₁ and a second optical signal S2 having a frequency f₂ (>f₁). The generated first optical signal S1 and second optical signal S2 are input to the first port of the circulator 102.

The circulator 102 has a three-port configuration and transmits the first optical signal S1 and the second optical signal S2, which are input to the first port, to the electro-optical conversion element 103 via the second port. The electro-optical conversion element 103 also receives a signal to be detected, i.e., an electrical signal, typically a wireless signal such as an RF signal or a terahertz signal. Within the electro-optical conversion element 103, the first optical signal S1 and the second optical signal S2 are modulated by the signal to be detected. At this time, in addition to the first optical signal S1 and the second optical signal S2, the optical spectrum output from the electro-optical conversion element 103 generates a sideband signal SB1 of the first optical signal S1 (also referred to as the "first sideband signal SB1") and a sideband signal SB2 of the second optical signal S2 (also referred to as the "second sideband signal SB2"). Here, let the difference between the frequency f₁ of the first optical signal S1 and the frequency of the first sideband signal SB1 be f_{RF}. Furthermore, let the difference between the frequency f₂ of the second optical signal S2 and the frequency of the first sideband signal SB1 be Δf (f_{RF} > Δf). The light containing sideband signals output from the electro-optical conversion element 103 is input to the second port of the circulator 102, output from the third port, and input to the optical filter 104. With regard to the input port and the output port of the circulator 102, we assume that optical signals are transmitted from the first port to the second port, from the second port to the third port, and from the third port to the first port, the same applies hereinafter.

Optical filter 104 is a bandpass filter that transmits light in the vicinity of frequency f₂. That is, optical filter 104 extracts the second optical signal S2 and the sideband signal SB1 of the first optical signal S1.

The light that has passed through optical filter 104, i.e., the second optical signal S2 and the sideband signal SB1 of the first optical signal S1, is input to photodiode 105. These optical signals are mixed by the photodiode to generate an IF signal. The frequency of this IF signal is f₂ - f₁ - f_{RF}.

This IF signal contains amplitude and phase information of the signal to be detected. By performing lock-in detection on this signal, the amplitude and phase of the signal to be detected are detected.

The frequency of the IF signal can be set arbitrarily by adjusting the frequency difference between frequency f₁ and frequency f₂.

Based on the above findings, embodiments of the present disclosure will be described.

### First Comparative Example

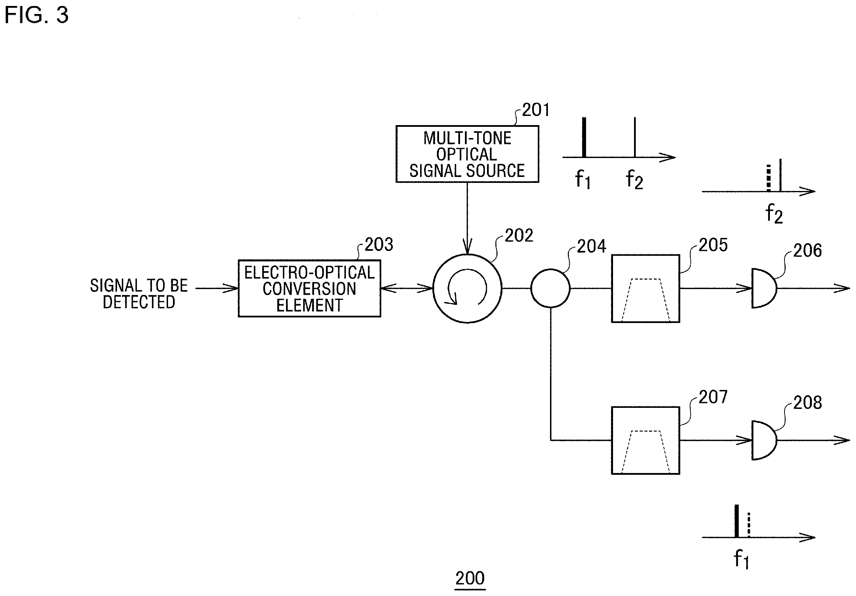

Figure 3 is a schematic diagram of a signal detection device 200 according to the first comparative example. The signal detection device 200 comprises a multi-tone optical signal source 201, a first circulator 202, an electro-optical conversion element 203, an optical coupler 204, a first optical filter 205, a first photodiode 206, a second optical filter 207, and a second photodiode 208.

The multi-tone optical signal source 201 generates a first optical signal S1 at a first frequency f₁ and a second optical signal S2 at a second frequency f₂. The generated first optical signal S1 and second optical signal S2 (hereinafter collectively referred to as the "multi-tone optical signal") are input to the first port of the first circulator 202. The multitone optical signal source 201 may be implemented using any suitable technique, such as a frequency-tunable laser, two modes filtered from a multi-frequency light source, or an optical frequency comb.

The first circulator 202 has a three-port configuration. The first circulator 202 outputs the first optical signal S1 and the second optical signal S2, which are input to the first port, from the second port and inputs them to the electro-optical conversion element 203. The electro-optical conversion element 203 also receives a signal to be detected, i.e., an electrical signal, typically a wireless signal such as an RF signal or a terahertz signal, at a frequency f_{RF}. Within the electro-optical conversion element 203, the first optical signal S1 and the second optical signal S2 are modulated by this signal to be detected. At this time, in the optical spectrum output from the electro-optical conversion element 203, the first sideband signals (SB1+, SB1-) and second sideband signals (SB2+, SB2-) of each optical signal are generated on both sides of the first optical signal S1 and the second optical signal S2. Let the frequencies of the first sideband signals SB1+ and SB1- be denoted as the first sideband frequencies f_{SB1}+ and f_{SB1-}, respectively. Similarly, let the frequencies of the second sideband signals SB2+ and SB2- be denoted as the second sideband frequencies f_{SB2+} and f_{SB2-}, respectively. Then, the first sideband frequencies f_{SB1+} and f_{SB1-}, and the second sideband frequencies f_{SB2+} and f_{SB2-}, are expressed as follows. ${f}_{SB 1 +} = {f}_{1} + {f}_{RF}$ ${f}_{SB 1 -} = {f}_{1} - {f}_{RF}$ ${f}_{SB 2 +} = {f}_{2} + {f}_{RF}$ ${f}_{SB 2 -} = {f}_{2} - {f}_{RF}$ Hereinafter,
Let Δf be
the difference between the second frequency f₂ and the first sideband frequency f_{SB1+}, and the difference between the first frequency f₁ and the second sideband frequency f_{SB2-}. Here, it is also possible to omit the first circulator 202 and directly input the multi-tone optical signal supplied from the multi-tone optical signal source 201 to the electro-optical conversion element 203 so that it is modulated by the detected signal. Hereinafter, such a configuration is referred to as the "through-type."

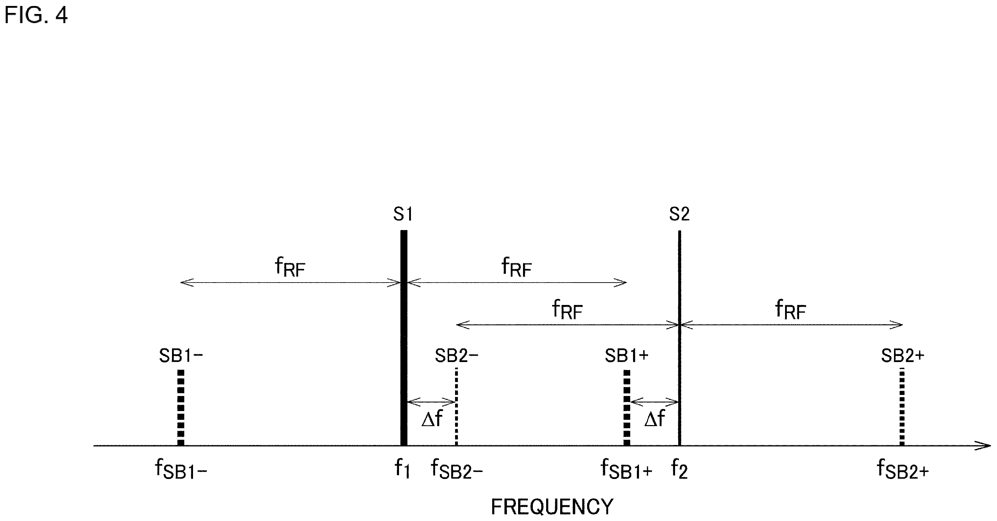

Figure 4 shows the optical spectra of the first optical signal S1 (thick solid line), the second optical signal S2 (thin solid line), the first sideband signal SB1 (thick dashed line), and the second sideband signal SB2 (thin dashed line).

The electro-optical conversion element 203 may utilize electro-optical crystal materials such as lithium niobate (LiNbO₃), lithium tantalate (LiTaO₃), zinc telluride (ZnTe), gallium phosphide (GaP), gallium arsenide (GaAs), OH1, or DAST.

As for the electro-optical polymer (EO polymer) described above, for example, the electro-optical polymer described in International Publication WO 2019/039530 may be used.

The multi-tone optical signal output from the electro-optical element 203 includes sideband signals. The multi-tone optical signal output from the electro-optical element 203 is input to the second port of the first circulator 202, output from the third port, and input to the optical coupler 204. In the through-type, the multitone optical signal output from the electro-optical element 203 is input directly to the optical coupler 204. The multi-tone optical signal is then split by the optical coupler 204 and input to the first optical filter 205 and the second optical filter 207.

The first optical filter 205 is a bandpass filter that transmits light with a bandwidth of at least Δf, with a higher cutoff frequency of f₂. That is, the first optical filter 205 extracts the second optical signal S2 and the first sideband signal SB1+.

The second optical filter 207 is a bandpass filter that transmits light with a bandwidth of at least Δf, with a lower cutoff frequency of f₁. That is, the second optical filter 207 extracts the first optical signal S1 and the second sideband signal SB2-.

The light that has passed through the first optical filter 205, i.e., the extracted second optical signal S2 and the first sideband signal SB1, is input to the first photodiode 206. These optical signals are mixed by the first photodiode 206 to generate a first IF signal. The frequency of this first IF signal is f₂ - f₁ - f_{RF}.

The light that has passed through the second optical filter 207, i.e., the extracted first optical signal S1 and the second sideband signal SB2, is input to the second photodiode 208. These optical signals are mixed by the second photodiode 208 to generate a second IF signal. The frequency of this second IF signal is f₂ - f_{RF} - f₁.

The signal detection device 200 performs detection based on the difference between the first IF signal output from the first photodiode 206 and the second IF signal output from the second photodiode 208.

The first IF signal and the second IF signal contain amplitude and phase information of the signal to be detected. By performing lock-in detection on these signals, the amplitude and phase of the signal to be detected can be determined.

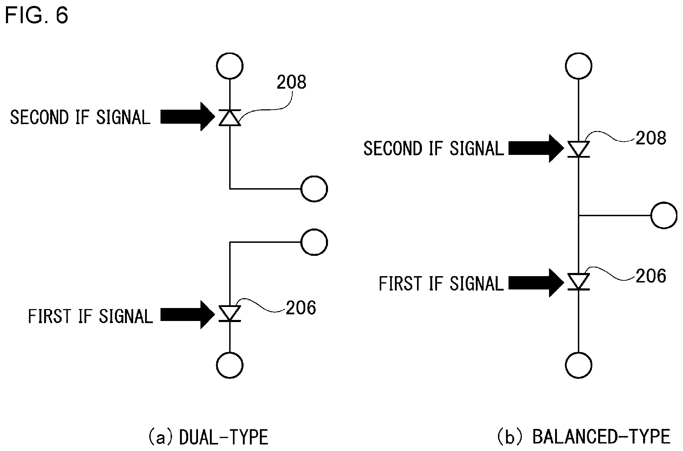

The first photodiode 206 and the second photodiode 208 may be arranged in any suitable manner, provided that they are arranged so as to enable detection based on the difference between the first IF signal and the second IF signal. For example, the arrangement of the first photodiode 206 and the second photodiode 208 may be the dual -type shown in Figure 6(a), where the two photodiodes are arranged independently, or a balanced-type shown in Figure 6(b), where the two photodiodes are connected in series so that their photocurrent cancels each other out.

In the experimental setup of Figure 3, only one set of optical signal and sideband signal, i.e., a combination of the second optical signal and the first sideband signal, is used to detect signals. Consequently, there is an issue of low detection sensitivity. In contrast, in the embodiment, two sets of optical signal and sideband signal, i.e., the combination of the second optical signal and the first sideband signal, and the combination of the first optical signal and the second sideband signal, are extracted, and detection is performed based on the difference between them. In this case, when the system satisfies specific conditions, for example, when the optical path length of the optical coupler 204-first optical filter 205-first photodiode 206 is approximately equal to the optical path length of the optical coupler 204-second optical filter 207-second photodiode 208, more specifically, for example, when the difference is within half a wavelength of the electrical signal Δf, the common-mode noise component is eliminated. This improves sensitivity.

### First Embodiment

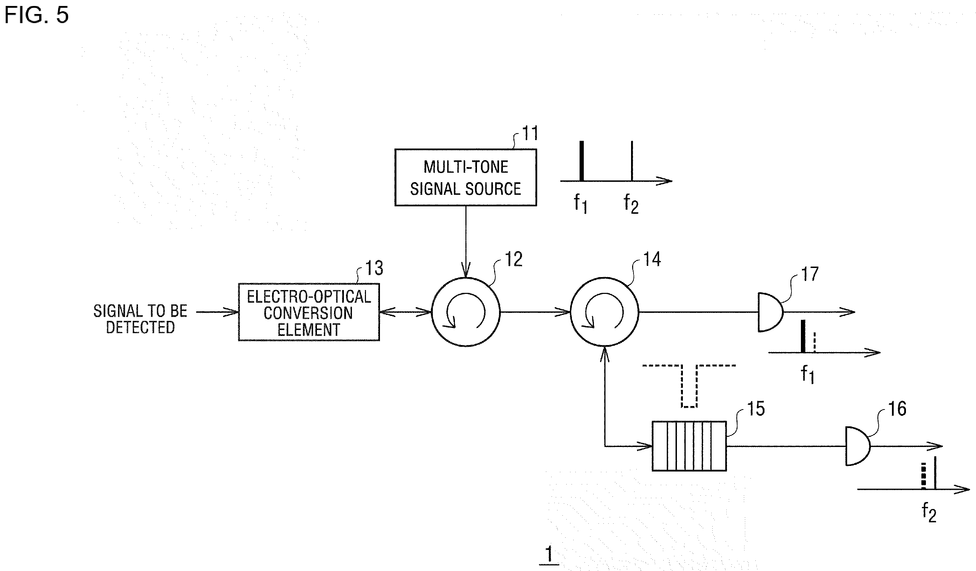

Figure 5 is a schematic diagram of a signal detection device 1 according to the first embodiment. The signal detection device 1 comprises
a multi-tone optical signal source 11,
a first circulator 12,
an electro-optical conversion element 13,
a second circulator 14,
an FBG filter 15,
a first photodiode 16, and
a second photodiode 17.

In this signal detection device 1, the multi-tone optical signal source 11, the first circulator 12, and the electro-optical conversion element 13 have the same configuration as the signal detection device 200 shown in Figure 3. The second circulator 14 has a three-port configuration, wherein the first port is connected to the third port of the first circulator 12, and the second port is connected to the FBG filter 15.

The FBG filter 15 is an optical filter utilizing a Fiber Bragg Grating (FBG), in which the Bragg wavelength is set to correspond to a bandwidth of at least Δf, with frequency f₁ as the lower limit. Here, the Bragg wavelength refers to the wavelength selectively reflected by the Fiber Bragg Grating. Light that has passed through the FBG filter 15, i.e., the second optical signal S2 and the first sideband signal SB1, is input to the first photodiode 16. These optical signals are mixed in the first photodiode 16, generating the first IF signal. The frequency of this first IF signal is f₂ - f₁ - f_{RF}.

Light reflected by the FBG filter 15, i.e., the first optical signal S1 and the second sideband signal SB2, is input to the second port of the second circulator 14, output from the third port, and input to the second photodiode 17. These optical signals are mixed at the second photodiode 17, generating the second IF signal. The frequency of this second IF signal is f₂ - f_{RF} - f₁.

Here, the optical path length from the transmission-side output of the FBG filter 15 to the first photodiode 16 and the optical path length from the reflection-side output to the second photodiode 17 via the second circulator 14 are set to be approximately equal, more specifically, within half a wavelength of the electrical signal Δf.

In this signal detection device 1 as well, similar to the signal detection device 200 shown in Figure 3, a first IF signal is output from the first photodiode 16 and a second IF signal is output from the second photodiode 17. Thus, it is possible to determine the amplitude and phase of the signal to be detected by performing detection based on the difference between these signals. With regard to the arrangement of these first photodiode 16 and second photodiode 17, as with the signal detection device 200 shown in Figure 3, either a dual-type or a balanced-type arrangement may be used.

According to this embodiment, high-sensitivity signal detection can be achieved, and since the second frequency f₂ of the second optical signal S2 can be selected from a band other than the Bragg wavelength of the FBG filter 15, the device offers high versatility.

### Second Embodiment

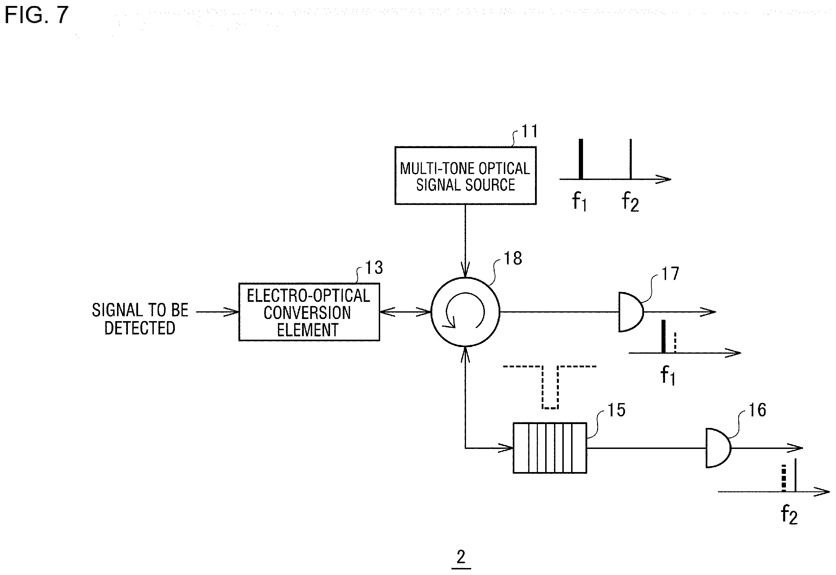

Figure 7 is a schematic diagram of a signal detection device 2 according to the second embodiment. The signal detection device 2 comprises a multi-tone optical signal source 11, an electro-optical conversion element 13, a third circulator 18, an FBG filter 15, a first photodiode 16, and a second photodiode 17.

In this signal detection device 2, the multi-tone optical signal source 11, the electro-optical conversion element 13, the FBG filter 15, the first photodiode 16, and the second photodiode 17 have the same configuration as the signal detection device 1 shown in Figure 5.

The third circulator 18 has a four-port configuration, with the multi-tone optical signal source 11 connected to the first port, the electro-optical conversion element 13 connected to the second port, the FBG filter 15 connected to the third port, and the second photodiode 17 connected to the fourth port. This third circulator 18 performs the combined functions of the first circulator 12 and the second circulator 14 of the signal detection device 1 described in the first embodiment.

In this embodiment as well, high-sensitivity signal detection can be achieved, and the second frequency f₂ of the second optical signal S2 can be selected from a band other than the Bragg wavelength of the FBG filter 15, thereby increasing versatility.

### Second Comparative Example

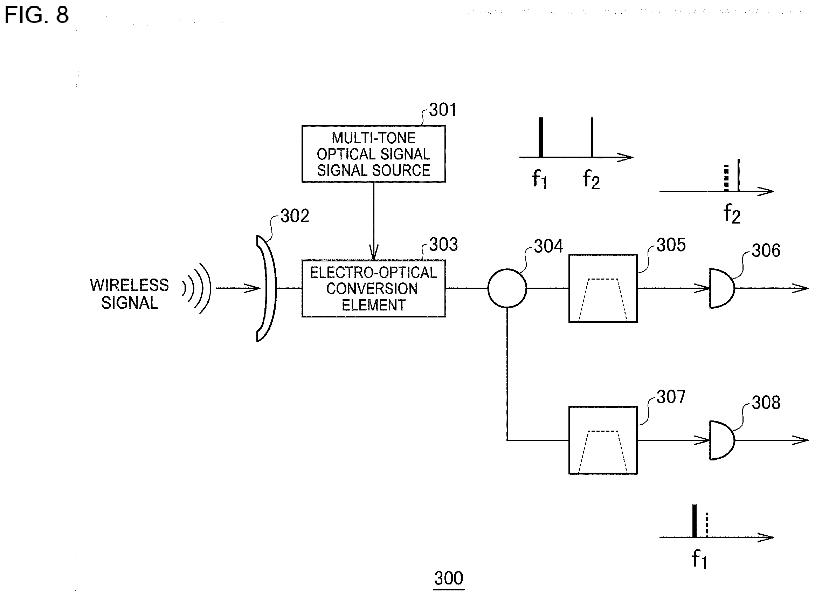

Figure 8 is a schematic diagram of a wireless receiving device 300 according to the second comparative example. The wireless receiving device 300 is configured as a through-type device and comprises a receiving antenna 302, a multi-tone optical signal source 301, an electro-optical conversion element 303, an optical coupler 304, a first optical filter 305, a first photodiode 306, a second optical filter 307, and a second photodiode 308.

The receiving antenna 302 may use any suitable antenna, such as a parabolic antenna, a Cassegrain antenna, or a horn antenna. Furthermore, a surface antenna mounted on the surface of the electro-optical conversion element may be used. This receiving antenna 302 receives radio signals and inputs the signal to be detected at frequency f_{RF} into the electro-optical conversion element 303. The first optical signal S1 and the second optical signal S2 generated by the multi-tone optical signal source 301 are input into the electro-optical conversion element 303. Within the electro-optical conversion element 303, the first optical signal S1 and the second optical signal S2 are modulated by the signal to be detected. This modulation in the electro-optical conversion element 303 is similar to that in the electro-optical conversion element 203 shown in Figure 3. Consequently, light containing sideband signals output from the electro-optical conversion element 303 is split by the optical coupler 304 and input to the first optical filter 305 and the second optical filter 307. The configuration and operation downstream of the optical coupler 304 are the same as those of the signal detection device 200 shown in Figure 3.

The wireless receiving device 300 may employ a first circulator 202, similar to the signal detection device 200 shown in Figure 3. In this case, the other configuration and operation of the wireless receiving device 300, excluding the receiving antenna 302, are the same as those of the signal detection device 200 shown in Figure 3.

### Third Embodiment

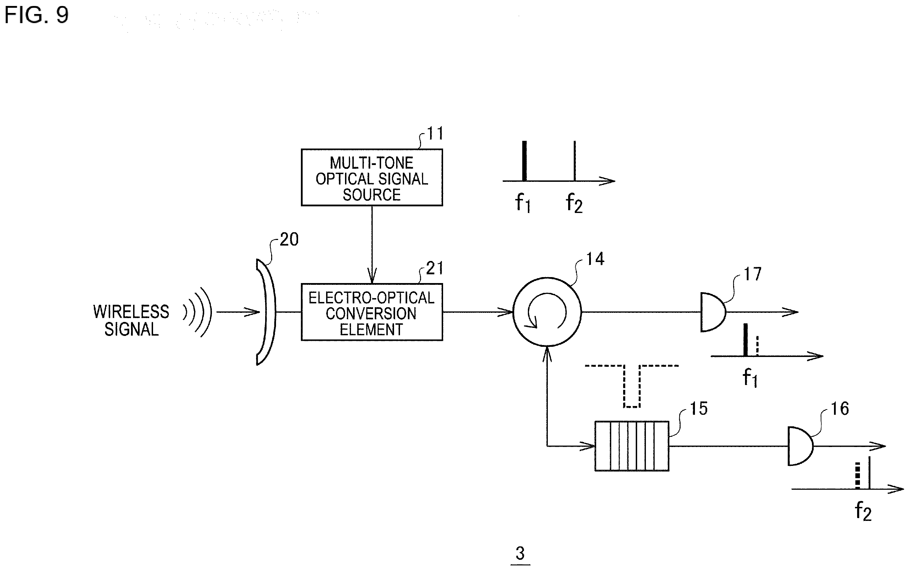

Figure 9 is a schematic diagram of the wireless receiving device 3 according to the third embodiment. The wireless receiving device 3 is configured as a through-type device and comprises a receiving antenna 20, a multi-tone optical signal source 11, an electro-optical conversion element 21, a second circulator 14, an FBG filter 15, a first photodiode 16, and a second photodiode 17.

In this wireless receiving device 3, the multi-tone optical signal source 11, the electro-optical conversion element 21, and the receiving antenna 20 have the same configuration as the wireless receiving device 300 shown in Figure 8. Furthermore, the second circulator 14, the FBG filter 15, the first photodiode 16, and the second photodiode 17 have the same configuration as the signal detection device 200 shown in Figure 3.

In this embodiment, the output of the electro-optical conversion element 21 is connected to the first port of the second circulator 14. Consequently, the multi-tone signal modulated by the electro-optical conversion element 21, which includes sideband signals, is input to the second circulator 14. A first IF signal is generated by mixing the second optical signal S2 and the first sideband signal SB1 at the first photodiode 16. A second IF signal is generated by mixing the first optical signal S1 and the second sideband signal SB2 at the second photodiode 17.

The wireless receiving device 3 may also employ a first circulator 12, similar to the signal detection device 1 shown in Figure 5. In this case, the other configurations and operations of the wireless receiving device 3, excluding the receiving antenna 20, are the same as those of the signal detection device 1 shown in Figure 5. Furthermore, when using the first circulator 12, the first circulator 12 and the second circulator 14 may be combined into a single unit using a 4-port circulator.

According to this embodiment, a highly sensitive wireless receiving device can be realized, and since the second frequency f₂ of the second optical signal S2 can be selected from a band other than the Bragg wavelength of the FBG filter 15, the device offers high versatility.

### Verification Experiments

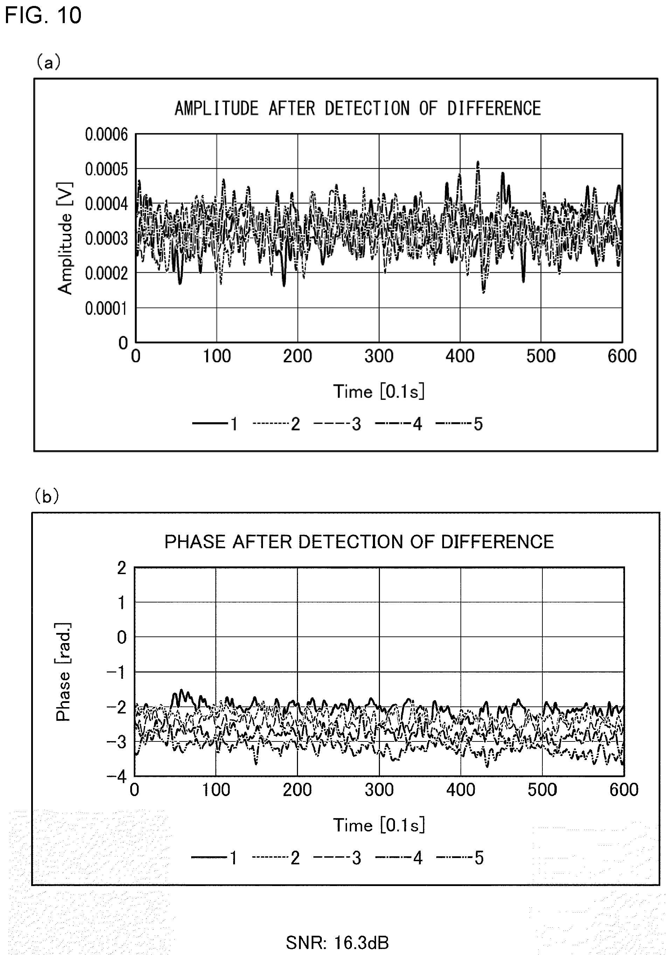

The inventors conducted experiments to verify the effectiveness of the signal detection device disclosed herein. Figure 10 shows the signal detection results based on the output of the signal detection device shown in Figure 5. Figure 10(a) shows the phase of the detected target signal. Figure 10(b) shows the amplitude of the detected target signal. From this, the obtained signal-to-noise ratio is 16.3 dB.

For comparison, Figure 11 shows the signal detection results based on the respective outputs from the first photodiode 16 and the second photodiode 17 of the signal detection device 1. Figure 11(a) shows the amplitude of the detected signal detected based on the output of the first photodiode 16. Figure 11(b) shows the phase of the detected signal detected based on the output of the first photodiode 16. Figure 11(c) shows the amplitude of the detected signal detected based on the output of the second photodiode 17. Figure 11(d) shows the phase of the detected signal detected based on the output of the second photodiode 17. These correspond to signal detection using conventional methods, i.e., detection not based on the difference between the two signals. The signal-to-noise ratios obtained from signal detection based on the outputs from the first photodiode 16 and the second photodiode 17 are 13.2 dB and 13.5 dB, respectively. Comparing this with Figure 10, it can be seen that, according to the embodiment, the signal-to-noise ratio has been improved by approximately 3 dB compared to the conventional method.

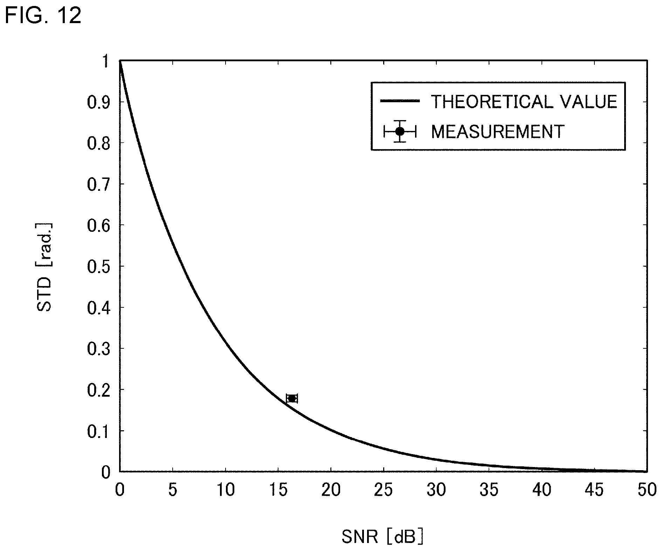

Figure 12 shows the relationship between the signal-to-noise ratio and phase variation in signal detection performed by the signal detection device 1. The horizontal axis represents the signal-to-noise ratio, and the vertical axis represents the standard deviation of the phase. The curves represent theoretical values, and the points represent measurements. As shown, it can be seen that, according to the embodiment, the measured values closely match the theoretical values, namely they lie on top of the curves. The above experimental results demonstrate the effectiveness of the embodiment.

The present disclosure has been described above based on the embodiments. These embodiments are illustrative, and it will be understood by those skilled in the art that various modifications are possible in the combination of their respective components and processing steps, and that such modifications also fall within the scope of the present disclosure.

Any combination of the aforementioned embodiments and variations is also useful as an embodiment of the present disclosure. New embodiments resulting from such combinations possess the combined effects of each of the combined embodiments and variations.

In understanding the technical concept abstracted from the embodiments and variations, the technical concept should not be interpreted as being limited to the content of the embodiments and variations. The embodiments and variations described above are merely illustrative examples, and numerous design modifications, such as changes, additions, or deletions of components, are possible. In the embodiments, content where such design modifications are possible is emphasized by the notation "embodiment." However, design modifications are also permitted for content without such notation.

### INDUSTRIAL APPLICABILITY

The present disclosure is particularly useful in the following fields.
- Detection of radio signals.
- Reception of radio signals.
- Visualization of electric fields.
- Measurement of material parameters.
- Measurement of component parameters.

### REFERENCE SIGNS LIST

- 1, 2: signal detection device
- 3, 4: wireless receiving device
- 11: multi-tone optical signal source
- 12: first circulator
- 13: electro-optical conversion element
- 14: second circulator
- 15: FBG filter
- 16: first photodiode
- 17: second photodiode
- 18: third circulator
- 20: receiving antenna
- 21: electro-optical conversion element
- 100: experimental setup
- 101: multi-tone optical signal source
- 102: circulator
- 103: electro-optical conversion element
- 104: optical filter
- 105: photodiode
- 200: signal detection device
- 201: multi-tone optical signal source
- 202: first circulator
- 203: electro-optical conversion element
- 204: optical coupler
- 205: first optical filter
- 206: first photodiode
- 207: second optical filter
- 208: second photodiode
- 300: wireless receiving device
- 301: multi-tone optical signal source
- 302: receiving antenna
- 303: electro-optical conversion element
- 304: optical coupler
- 305: first optical filter
- 306: first photodiode
- 307: second optical filter
- 308: second photodiode

## Claims

1. A signal detection device for detecting an electrical signal, comprising:
an electro-optical conversion element that modulates a first optical signal having a first frequency and a second optical signal having a second frequency with the electrical signal;
an optical filter that extracts light in a band containing the second optical signal and a sideband signal of the first optical signal and that extracts light in a band containing the first optical signal and a sideband signal of the second optical signal;
a first photodiode that generates a first intermediate frequency signal from the second optical signal and a sideband signal of the first optical signal; and
a second photodiode that generates a second intermediate frequency signal from the first optical signal and a sideband signal of the second optical signal,
wherein the optical filter includes a FBG filter that reflects light in a band containing the first optical signal and sideband signals of the second optical signal and that transmits at least light in a band containing the second optical signal and sideband signals of the first optical signal and a circulator that receives the first optical signal and the second optical signal modulated by the electrical signal and outputs the first optical signal and the second optical signal to the FBG filter and that outputs the first optical signal and the sideband signal of the second optical signal reflected by the FBG filter to the second photodiode, and
wherein the signal detection device performs detection based on the difference between the output from the first photodiode and the output from the second photodiode.

2. The signal detection device according to Claim 1,
wherein the optical filter is configured such that the difference between the optical path length from the transmission-side output of the FBG filter to the first photodiode and the optical path length from the reflection-side output of the FBG filter through the circulator to the second photodiode is within half a wavelength of the electrical signal.

3. The signal detection device according to Claim 1,
wherein the first photodiode and the second photodiode are arranged in a dual-type arrangement.

4. The signal detection device according to Claim 1,
wherein the first photodiode and the second photodiode are arranged in a balanced-type arrangement.

5. The signal detection device according to Claim 1,
wherein the electro-optical conversion element comprises lithium niobate (LiNbO₃), lithium tantalate (LiTaO₃), zinc telluride (ZnTe), gallium phosphide (GaP), gallium arsenide (GaAs), OH1, or DAST.

6. The signal detection device according to Claim 1,
wherein the electro-optical conversion element comprises an electro-optical polymer.

7. A wireless receiving device for receiving wireless signal, comprising:
a receiving antenna;
a multi-tone light signal source for generating light signals of multiple frequencies;
an electro-optical conversion element that modulates a first optical signal having a first frequency and a second optical signal having a second frequency, both generated by the multi-tone light signal source, with the wireless signal;
an optical filter that extracts light in a band containing the second optical signal and a sideband signal of the first optical signal and that extracts light in a band containing the first optical signal and a sideband signal of the second optical signal;
a first photodiode that generates a first intermediate frequency signal from the second optical signal and a sideband signal of the first optical signal; and
a second photodiode that generates a second intermediate frequency signal from the first optical signal and a sideband signal of the second optical signal,
wherein the optical filter includes a FBG filter that reflects light in a band containing the first optical signal and sideband signals of the second optical signal and that transmits at least light in a band containing the second optical signal and sideband signals of the first optical signal and a circulator that receives the first optical signal and the second optical signal modulated by the wireless signal and outputs the first optical signal and the second optical signal to the FBG filter and that outputs the first optical signal and the sideband signal of the second optical signal reflected by the FBG filter to the second photodiode and
wherein the wireless receiving device performs detection of the wireless signal based on the difference between the output from the first photodiode and the output from the second photodiode.

8. The wireless receiving device according to Claim 7,
wherein the optical filter is configured such that the difference between the optical path length from the transmission-side output of the FBG filter to the first photodiode and the optical path length from the reflection-side output of the FBG filter through the circulator to the second photodiode is within half a wavelength of the wireless signal.
